# EUROPEAN PATENT APPLICATION

(11) **EP 3 301 863 A1**
(43) Date of publication of application: **04.04.2018**
(21) Application number: 17193884.8
(22) Date of filing: 28.09.2017
(51) Int. Cl.: H04L 12/58, H04L 29/08, H04W 4/02

(54) **METHOD AND SYSTEM FOR MANAGING CONTENT DELIVERY USING A VEHICLE INFOTAINMENT SYSTEM**

(30) Priority: 29.09.2016 EP 16306257
(71) Applicant: Thomson Licensing, 92130 Issy-les-Moulineaux (FR)
(72) Inventor: VOSSEN, Danny, 2650 BELGIUM (BE)
(74) Representative: Huchet, Anne

(57) **Abstract**

A system and method for delivering content to a vehicle occupant. In one embodiment the method comprises establishing and maintaining communication between a vehicle access point and a content supplier via a vehicle infotainment processor and establishing communication between vehicle access point and said user's personal processing device of said user via said vehicle infotainment processor. The method also comprises delivering content to the user based on previous user selection made via said vehicle infotainment processor.

## Description

### TECHNICAL FIELD

The present disclosure relates generally to a content delivery system and more particularly to a content delivery system using a vehicle infotainment system.

### BACKGROUND

This section is intended to introduce the reader to various aspects of art, which may be related to various aspects of the present invention that are described and/or claimed below. This discussion is believed to be helpful in providing the reader with background information to facilitate a better understanding. Accordingly, it should be understood that these statements are to be read in this light, and not as admissions of prior art.

Computers have been used to coordinate information between multiple locations almost since their inception. The continued advancement in portable battery life and the miniaturization of computing resources have spurred commercial growth. With the advent of mobile devices including cellular phones and portable laptops, use of computers have become a necessity of daily life. Mobile computing, however, can have restrictions. The size of a display screen or reception issues can interfere with timely performance and long term enjoyment of the device. The seamless transition between one device to another to lessen such restrictions is not achievable easily at current time without the user having to input relevant information as to content each time the device is changed.

One desirable area where a smooth transition between mobile derives and other device can be beneficial is in the area of vehicle infotainment systems. Infotainment systems are generally referred to electronic devices and systems that provide both information and entertainment to the user. These days, the passengers of a vehicle often each carry their own mobile devices such as smart phones, tablets and notebook computers, among others. When travelling together, especially on long drives, the difficulty of connecting the vehicle infotainment systems with that of individual mobile devices of the passengers create challenges. In most cases, when several passengers are travelling together, the seamless transition between these mobile devices and the vehicle infotainment system often force each passenger to resort to using individual devices, abandon using all devices completely or duplicate information each time on multiple disjointed devices separately to enable multi user communications. Neither of these alternatives are desirable. Consequently, an improved technique is needed to provide a system that can be integrated with one or more mobile devices and can create seamless transitioning between a vehicle infotainment systems and individual mobile devices.

### SUMMARY

A method for delivering content to a vehicle occupant. In one embodiment the method comprises establishing and maintaining communication between a content supplier and a vehicle infotainment processor and establishing communication between a user's personal processing device and the vehicle infotainment processor. The method also comprises delivering content to the user based on previous user selections made via the vehicle infotainment processor.

In another embodiment, a method and system is also provided. In one embodiment, the method comprises establishing communication between an infotainment processor of a vehicle and a content supplier and establishing communication with at least one personal processing device of said user via the infotainment processor. Content is then delivered via the infotainment processor to the user based on one of the following conditions: determining any content delivery in progress or temporarily interrupted on the user's personal processing device; and when no content delivery is in progress determining previous user preferences of the user and recommending content to be delivered based on these user preferences.

Additional features and advantages are realized through the techniques of the present disclosure. Other embodiments and aspects of the invention are described in detail herein and are considered a part of the claimed invention. For a better understanding of the invention with advantages and features, refer to the description and to the drawings.

### BRIEF DESCRIPTION OF THE DRAWINGS

The present disclosure will be better understood and illustrated by means of the following embodiment and execution examples, in no way limitative, with reference to the appended figures on which:
Figure 1 is a block diagram depiction of a computer system as used according to one embodiment;
Figure 2 is a block diagram depiction of a depiction of a network and system including a vehicle infotainment device according to one embodiment;
Figure 3 is a flowchart depiction according to one embodiment for delivery content to one or more vehicle occupants;
Figure 4 is an illustration of displaying available contents for viewing to a vehicle occupant according to one embodiment; and
Figure 5 is an illustration of additional information availability about content displayed as per embodiment of Figure 4;
Figure 6 is an illustration of content delivery options according to one embodiment;
Figure 7 is an illustration of exemplary embodiment, depicting multiple legs or stops of a journey according to which content can be preselected for delivery or interruption;
Figure 8 is an illustration of according to an embodiment where different functionality is provided during stops from when the vehicle is moving;
Figure 9 is an illustration of an embodiment where control is relinquished to a main infotainment unit; and
Figure 10 is an illustration of the embodiment of Figure 10 where control is shared or entirely given to other than main infotainment unit.

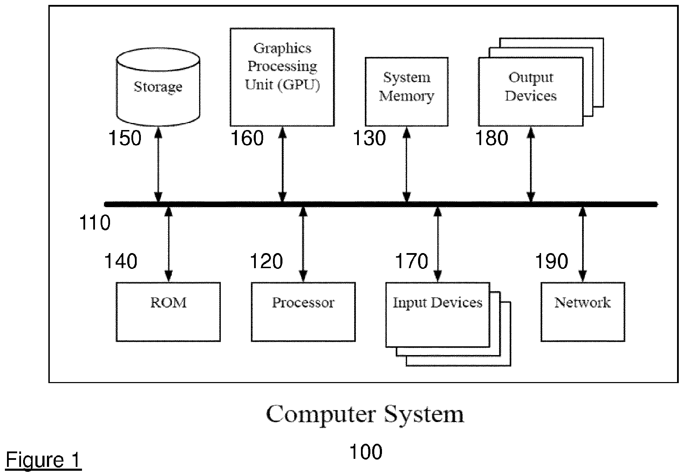

In Figures 1-10, the represented figures provide examples that are purely functional entities and do not necessarily correspond to physically separate entities. Namely, they could be developed in the form of software, hardware, or be implemented in one or several integrated circuits, comprising one or more processors.

Wherever possible, the same reference numerals will be used throughout the figures to refer to the same or like parts.

### DESCRIPTION

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modification. In addition, various inventive features are described below that can each be used independently of one another or in combination with other features. Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Figure 1 is a schematic block diagram illustration of a computer system 100 such as one that can be used in conjunction with different embodiments as will be discussed. The computer system 100 may be implemented using various appropriate devices. For instance, the computer system may be implemented using one or more personal computers ("PC"), servers, mobile devices (e.g., a Smartphone), tablet devices, and/or any other appropriate devices. The various devices may work alone (e.g., the computer system may be implemented as a single PC) or in conjunction (e.g., some components of the computer system may be provided by a mobile device while other components are provided by a tablet device). The computer system 100 may include one or more bus or bus systems such as depicted by 110, at least one processing element 120, a system memory 130, a read-only memory ("ROM") 140 , other components (e.g., a graphics processing unit) 160, input devices 170, output devices 180, permanent storage devices 130, and/or a network connection 190. The components of computer system may be electronic devices that automatically perform operations based on digital and/or analog input signals.

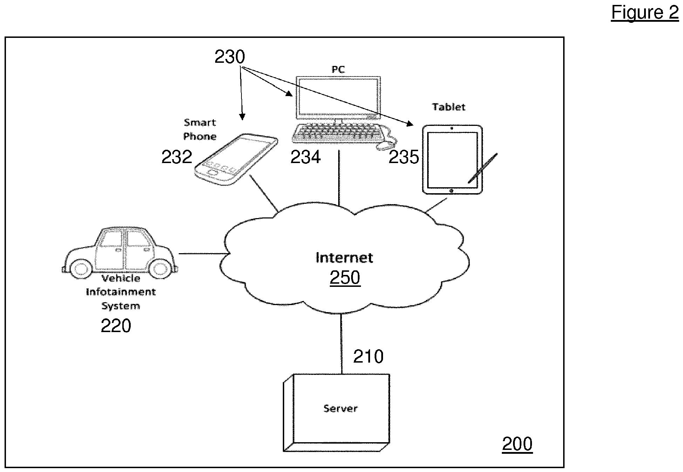

Figure 2 illustrates a block diagram of an embodiment of a system 200 for delivering content to a user such as a vehicle occupant via an infotainment system of a vehicle 220. The system 200 may include a server 210 and one or more electronic devices 230 such mobile devices including smart phones (e.g., a companions device) 232, personal computers (PCs) 234 such as laptops and tablets (235). The infotainment system 220 itself can include the computer system 100 of Figure 1 entirely or be in processing communication to one or more of the units shown through the user of the network 250 which forms part of the system network 200. In addition, one or more displays, processing components and user interfaces can be provided as part of the infotainment system 220 (such as discussed in conjunction to input and output devices 17 0 and 180 of Figure 1). While the illustration of Figure 2 for ease of understanding provides shows a car as an example of a vehicle, it should be understood that a vehicle is used to include all similar vessels as can be understood by those skilled in the art. As other examples, the vehicle infotainment system can be disposed and be part of a plane, a boat or cruise ship or other such navigational vessels.

Each electronic or mobile device 230 can also have its own displays, processors and other components as can be appreciated by those skilled in the art. In addition, the server 210 and other components may be directly connected, or connected via the network 250 which may include one or more private networks, the Internet or others.

In one embodiment, the server provides support for the management and delivery of over the top content (OTT). As known to those skilled in the art, in broadcasting OTT provides for delivery of audio, video, and other media over the Internet without the involvement of a multiple system operator in the control or distribution of the content. In one embodiment, OTT can also include content from a third party that is delivered to an end-user, by simply transporting IP packets. In another embodiment, text messaging can also be provided. In one embodiment, OTT messaging can also be provided throughout the same system such as one using one or more instant messaging services (as an alternative to text messaging) such as one provided by a mobile network provider. In one embodiment, one or more users may access the OTT service provider via the server and use their companion devices (e.g., the electronic devices such as smartphones, tablets, or PCs) to manage their subscription and purchased content. In addition, a navigation system can be provided as part of vehicle infotainment system 220 or as part of the network 250 or through the server 210. The navigation system, for example can include one or more positioning device(s) such as a global positioning system (GPS).

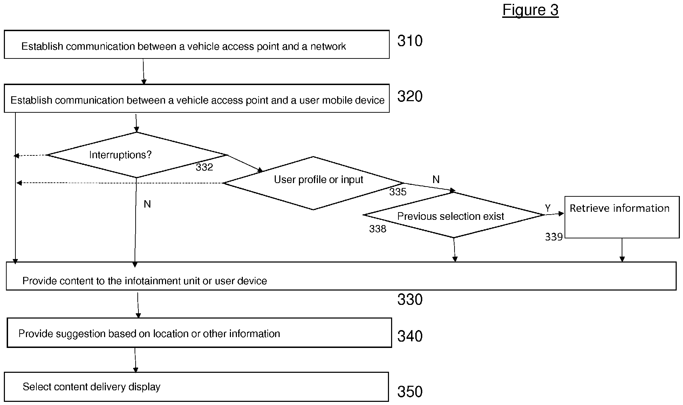

Figure 3 is a flow chart depiction of one embodiment of the present invention. As shown a method of delivering content to a vehicle occupant is provided. In step 310, communication is established (and maintained) between a vehicle access point, such as via an infotainment system 220 alone or via the network (250). The network (250) can also be in communication with a content supplier (not shown). In step 320, communication is also established (and maintained) between the vehicle access point and a personal mobile device of vehicle occupant (hereinafter a user) such as provided in 230 in general. In one embodiment, the user may be connected to one or more networks already. This network connection may be maintained or a new and separate connection may be established. Alternatively, if no network connection is available, and as means for providing a backup redundant system information can be stored and recovered from the infotainment system that can have direct connection to one or more processors, storage or even servers with pre-stored content and user information to enable service to the user without the vehicle infotainment system 220 being further connected in a wide area network such as the Internet 250 or a similarly positioned private network.

In step 330, content is delivered to be displayed to the user in a number of ways as provided by the different arrows and paths as depicted in Figure 3. It should be noted that more than one user can be available in the vehicle and each vehicle occupant can be considered as a different user. The content that is to be delivered can be provided through using the network or via local storage and processor as discussed above. Content can be provided to each user separately, or be provided through the infotainment system to one or more vehicle occupants at the same time. In one embodiment, the communication can be selected to be either first presented to the user through the mobile device or through the infotainment system. If no preselection is made, a default condition can be preselected that can be changed as desired. In addition, content can be provided via a display or otherwise and can include a variety of manners such as textual, graphical, pictorial and/or a combination of these and others as can be appreciated by those skilled in the art.

In step 330, the content that is to be provided can be based on one or more of the following conditions. In step 332, it is determined if a previous communication is disrupted which will be restored if such is the case. In step 335 it is determined if a content delivery is in process or temporarily interrupted due to communication storage such as with the personal (i.e. mobile) processing device 330. Determination can be made based on one or more user personal (mobile) processing devices. In step 338, if no content delivery is in progress, then infotainment system can provide one or more news, information or entertainment selection through the vehicle display of the infotainment system or via the user mobile device based on previous user preferences and other information. User preferences, can be retrieved by searching for a user profile. The user preferences and the user profile can reside in the vehicle infotainment system, the user's personal mobile device, the server or reside elsewhere and be generally accessible by using the network (250 of Figure 2). If such information exists, it will be retrieved as shown at step 339.

Alternatively, if no user profile exists or cannot be retrieved through network connection, previous user selection based on a stored user profile or pre delivered content while using the infotainment system at a previous time can be retrieved.

In one embodiment, a user preference can be established based on one or more factors for example a user profile, prior user activity with media, and explicit user inputs. In addition, as stated more than one users can be present in a vehicle and in such case separate profiles may exist and be communicated to them via different devices, with more than one user being presented simultaneously with selections.

In one embodiment, other information as well as user preferences can be taken into consideration. For example, if no user preference is provided, news or other information and entertainment options can be provided to one or more vehicle occupants or user based on other information such as location alone. In another embodiment, location or other information can be taken into account even when user profile or previous selection is retrieved. This is shown in step 340. Based on user's previous preferences, one or more activities or other information can then be presented to the user for selection if desirable. For example, embodiments of the present disclosure may also include other recommendations based on destination. For example, some embodiments may access a vehicle's navigation system to determine the destination of the user and propose a list of content that are set at that specific destination, include actors/singers from that destination. To illustrate this concept, a road trip to Seattle may provide the a list of content that are set or have scenes filmed in Seattle such as, Mission Impossible: Ghost Protocol, My Own Private Idaho, Sleepless in Seattle, War Games, Get Carter, etc. Other embodiments may also provide a selection of artists from Seattle or music and/or playlists about Seattle. Moreover, other embodiments may provide recommendations based on trip length. For example, if the calculated length of a trip (e.g., miles to travel and/or time approximations based on current traffic conditions) is known, content that may be consumed during the trip may be recommended. Some embodiments may also allow the benefit of allowing the user to re-start a title seamlessly at another device outside the vehicle. This would allow a user to start and stop the playback of content between a vehicle and another out of vehicle device (e.g., computer, home entertainment center, smartphone, etc.) in any order. Finally, to assist a driver with the purchase of content, voice controls may also be available so the driver is not distracted with a complex decision within the infotainment system.

In one embodiment, the user can then decide to either accept one of the selections to be provided via a mobile or another personal processing device to the user or through the infotainment system. Alternatively, one or other selections or searches and can be made by the user independently. Any searches and selections, if desired by the user can then be saved in the infotainment system or at any other location where the user profile exists for future access. Furthermore, in another embodiment, the information system has one or more component that can automatically recognize one or more user mobile devices and associate a user profile with the user device. The information system can then proceed with providing all the functions as discussed and provided in conjunction with Figure 3.

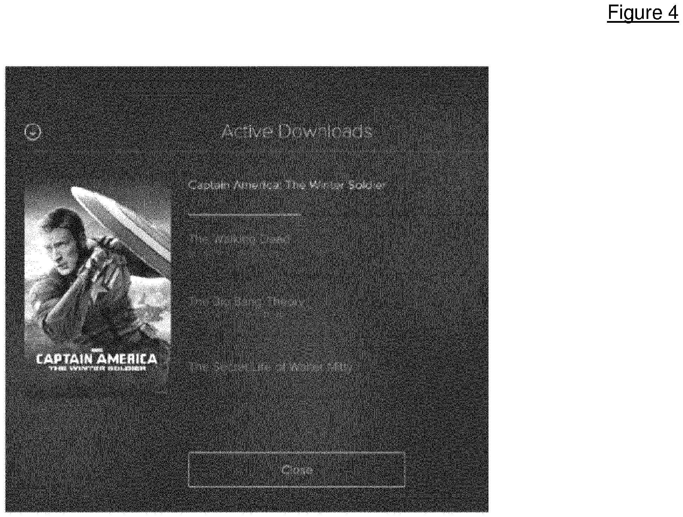

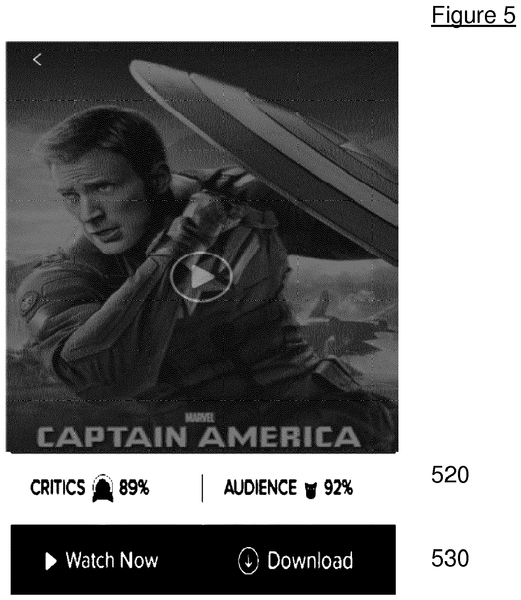

Figures 4 and 5 provide an example of selection options, in this case a movie or television show. In Figure 4 a final list of recommendation is provided, from which the user can make one or more selections. In one example, a combination of movies or television shows or series can be presented.

In Figure 5, as provided in this example, other information about the movie can also be presented to the user/occupant once a selection is contemplated. Such information can include the popularity of the selection based on critics' or audience votes as shown in 520. As can be appreciated by those skilled in the art other such information can also be provided. The user can then be given an option 530 to watch the movie now using the infotainment system of the vehicle or download it on a mobile device or on the vehicle for later enjoyment or in case of a network disruption. In some embodiments, an ability to select both options simultaneously is also provide.

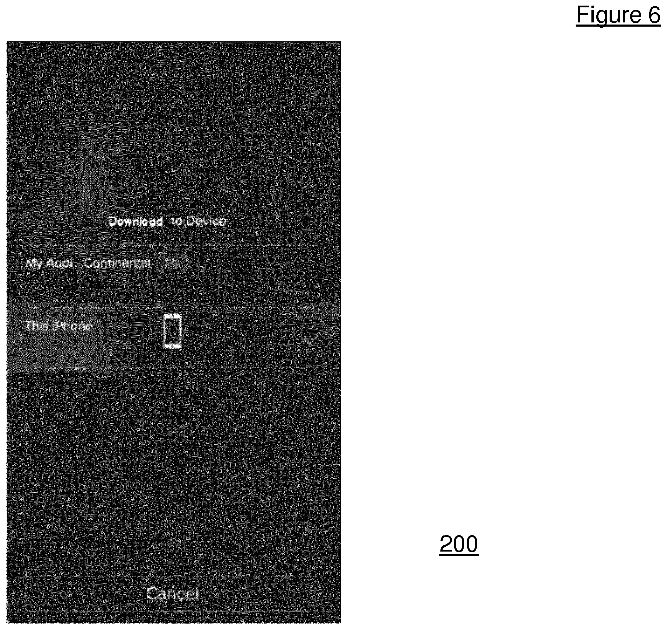

In Figure 6, an exemplary screen is provided where user can select to download the content delivery either to the vehicle infotainment system or to a user personal device. In another embodiment, it is also possible to download the selection to another user selected location through the network such as a user's office, the user's home, the user's hotel, or even another location such as a location with a local printer.

It can be appreciated by those skilled in the art that the content provided to the user is not limited to entertainment and movies alone. Any content including news, local restaurants, video and other games, information about popular tourist destinations, hotels and other such categories may be presented.

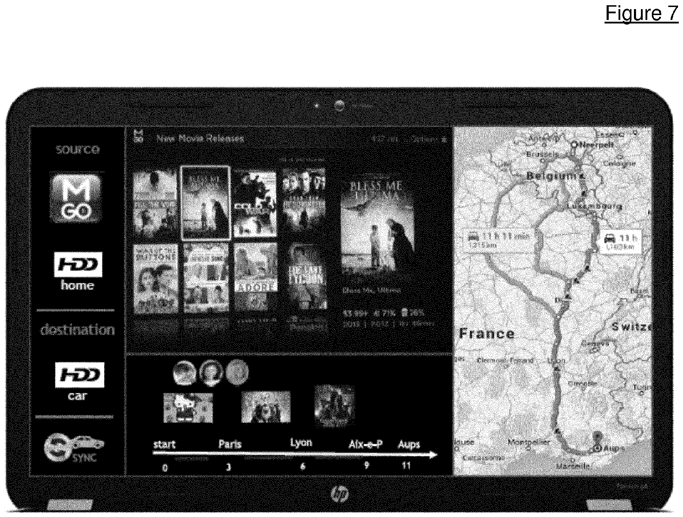

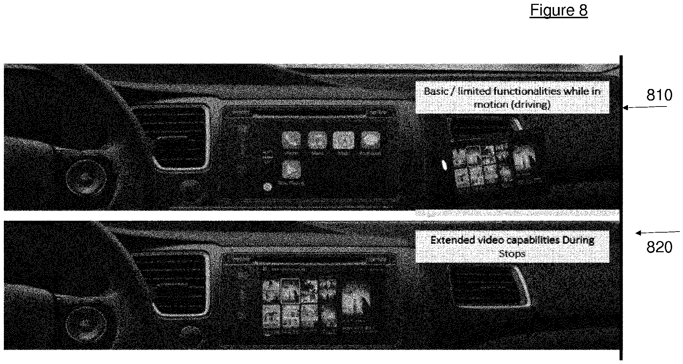

In an alternate embodiment, the one or more users or vehicle occupants can plan the journey upfront by providing length of journey, nature of desired content and even one or more stops as shown in Figure 7. Figure 7 is an illustration of exemplary embodiment, depicting multiple legs or stops of a journey according to which content can be preselected for delivery or interruption. Trip interruption due to these legs or stops can be planned such that an already selected content is paused accordingly at a convenient viewing location that can be then be easily taken up again after trip has commenced anew. Alternatively, a stop in the journey may be planned ahead such that a first content is completed entirely prior to the stop, and a new content is presented after the stop is terminated. The selection process such as discussed can be communicated ahead of time directly or through a user's mobile device to the vehicle infotainment system. In some embodiments, the content can then be retrieved completely prior to the trip commencement to minimize possible connectivity issues or be retrieved dynamically during the journey such as in the case of displaying live shows and programs. In another embodiment, audio video capabilities or access may be extended during stops. Therefore, a first more basic availability of functionalities and image retrieval may be available while the vehicle is moving while a different and more extensive availability may become available during a stop. An example of this is provided in Figure 8 at 810 and 820. Figure 8 is an illustration of according to an embodiment where different functionality is provided during stops from when the vehicle is moving. In such an embodiment, the content is not interrupted during a stop but rather enhanced. In yet another embodiment, content may only be displayed during a stop or an enhanced content is presented during the stops. In another embodiment, an extended traffic jam or traffic delay can also be taken into consideration such that if the car is not moving for an extended period of time (i.e. exceeding a threshold) and the stop was not anticipated, different functionality and viewing options are presented. In addition, certain dynamic information about the stop is presented such as reason for the traffic delay, alternate routes, possible stopping facilities (dinning, lodging etc.) and information relating to such possible stopping facilities, whether intentional or due to a traffic delay.

In one embodiment, the infotainment system can be equipped such as to be provided OTT content. Some embodiments of the present disclosure leverage OTT service provider ecosystems and applications via companion devices that may assist in delivering and managing content within an automotive infotainment system. Some embodiments may manage the connectivity to an OTT service provider based on available connections where cost and data plans may be taken into account. For example, cellular data (3G, LTE, etc.), vehicles equipped with their own gateways, and available Wi-Fi connections at home or on the go may be used in various combinations to push data to a vehicle's infotainment system. Some embodiments provide options for pre-loading content to a vehicle infotainment system based on recommendations, where the downloaded content can be unlocked by purchase via the vehicle's infotainment system and/or companion applications on the user device. Some embodiments provide for automated downloads when the vehicle is at a home network. The automated downloads may include all content owned by a user or select specific genres (e.g., "kids"). In addition, some embodiments allow for a companion device to browse and select content to be downloaded to a vehicle's infotainment system. Some embodiments may also include features for enhancing recommendations for a trip by considering the environment the vehicle is in. For example, implicit recommendations based on car seating configurations may be provided in some embodiments. This may include boosting for kids/children content in the back seats when the OTT service provider has identified that kids are part of the household account. Machine learning may also be implemented to refine the granularity of recommendations if there are multiple children in the household and boosting more relevant content for each child.

Referring back to Figure 3, in step 350, in one embodiment the user can select such as through the infotainment system to either display the selection on a user mobile screen or on a screen connected to the vehicle infotainment system. It should be noted that more than one control component and display may be provided in the same vehicle. In one embodiment, the vehicle infotainment system can select content to be played on particular displays in the vehicle according to user profile of one or more users (based on communication with user individual mobile device) or when no such information available based on a variety of other factors. These factors may include vehicle speed, seat positions and weight associated with the seat as well as previously mentioned factors such as location of the car, destination and length of trip and particular electronic devices in communication with the vehicle infotainment system.

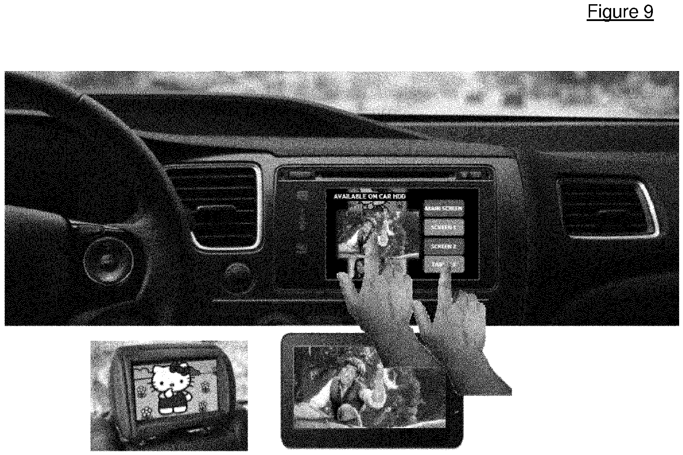

Figure 9 is an illustration of an embodiment where control is relinquished to a main infotainment unit. In the embodiment of Figure 9, as shown, control of the content for all in car screens can be solely performed through a main component or display of the infotainment system such as for example from a front module. In this embodiment, selections can be made from various video sources such as video on demand (VOD), Live, Home lib, in car hard disk drive (HDD) and the like as can be appreciated by those skilled in the art. Content can then be browsed on this main (head) component or unit and accordingly and selectively sent to other in car displays for screening. For example when content is to be purchased, it may be desirous to send trailer clips to all displays and occupant prior to purchase is completed. In addition, a set-up or a playlist can be then selected to display to other desired units. Parental control settings can also be set up via this main unit (i.e. which content can be served to which screens). Alternatively this process can be automated through the use of one or more sensors. For example, the infotainment system can determine displays associated with occupied seats, detected such as by sensors registering a certain weight and only activate those accordingly. In addition, the sensor can monitor such weight (such as by comparing it to a threshold) and not present more mature content to a seat that has been deemed to be occupied by a child. The threshold weight can be preset such as by means of a default or through preselection of a threshold by a user or vehicle occupant. Other factors, other than weight such as presence of a child seat, for example, can also be taken into consideration.

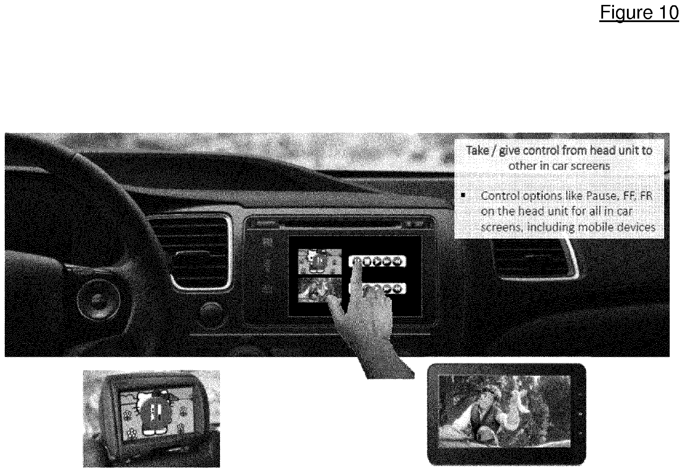

In another embodiment such as shown in Figure 10, control can be transferred from a main infotainment component and display to other such components and displays. Figure 10 is an illustration of the embodiment of Figure 10 where control is shared or entirely given to other than main infotainment unit. For example, such functionalities like volume, pause, fast forward and reverse plays and such can be controlled by other units. In another embodiments, such control can be given to user mobile devices. Control can then be returned or taken back by the main infotainment component.

Many of the techniques described above may be implemented as software processes that are specified as at least one set of instructions recorded on a non-transitory storage medium. When these instructions are executed by one or more computational elements the instructions cause the computational element(s) to perform actions specified in the instructions.

In one embodiment, the system for delivering OTT content to an infotainment system of a vehicle may include additional servers that can be accessed through the network or the vehicle infotainment system directly to provide support for the management and delivery of OTT content. In such a case, the users may access the OTT service provider via the server and use their companion devices (e.g., the electronic devices such as smartphones, tablets, or PCs) to manage their subscription and purchased content.

## Claims

1. A method for delivering content, comprising:
establishing communication between a moving mobile device (320) and a content supplier (310);
delivering via said mobile device content based on at least one of the following conditions (330):
determining any content delivery in progress or temporarily interrupted on said mobile device (332) due to said movement;
when no content delivery is in progress determining previous user preferences (338) of a user of said at least one personal device and recommending content to be delivered based on said user preferences associated with location of the mobile device.

2. A system for delivering content to a mobile device of a vehicle occupant, comprising:
a processor associated with the mobile device and configured to establish communication with a content supplier (310);
said processor delivering content to be displayed to said vehicle occupant based on at least one of the following conditions (330):
determining any content delivery in progress or temporarily interrupted on said personal mobile device (332); and
when no content delivery is in progress determining previous user preferences of said vehicle occupant and recommending content to be delivered based on said user preferences (340).

3. The method of claim 1, or the system of claim 2 wherein said user preference is based on previous content delivery selection made.

4. The method of claims 1 or 3, or the system of claim 2 or 3wherein said mobile device is a vehicle infotainment processor (220).

5. The method or the system of claim 4, wherein determining user preferences further comprises determining previous content delivery selections made via said vehicle infotainment processor (220).

6. The method or the system of claim 3, wherein determining user preferences further comprises determining if a user profile exists containing user preference input and previous user selection habits and said user profile is obtained from said personal processing device (230).

7. The method of claim 1 or 3, or the system of claim 2 or 3, wherein said user preferences are based at least one or a user profile (335), prior user activity with media, and explicit user inputs (335).

8. The method of claim 1 or 3, or the system of claim 2 or 3, wherein when no previous user preferences are found, providing a plurality of content selection options for delivery; said selections provided based on information about vehicle infotainment location and a trip schedule provided by said user to said vehicle infotainment processor (340).

9. The method of any one of claims 1 and 3 to 8, or the system of claims 2 to 8, wherein said processor is configured for monitoring a vehicle speed and providing content delivery and a plurality of content related functionality options to said user based on a vehicle speed such that said content delivery is interrupted when said vehicle's speed falls below a first value.

10. The method of claim 9 or system of claim 9, wherein said vehicle's speed is calculated and content delivery is restored when said vehicle speed exceeds a second value.

11. The method or system of claim 10 wherein a first level of functionality related to content availability is provided when said vehicle is below a certain speed and a second level of functionality related to content availability is provided when said vehicle is above a certain speed.

12. The method of claims 1 to 3 or system of claims 2 or 3 wherein content delivery is provided to a plurality of devices simultaneously and said simultaneous content delivery is presented to at least two displays associated with different users via said mobile device.

13. The method or system of claim 11, wherein at least a portion of delivery of content is not presented to a second user because of restrictions provided on content delivery to said second user by a first user.

14. The method or system of claim 4, wherein said vehicle infotainment processor determines presence of a plurality of users by obtaining data from at least a sensor; said sensor monitoring seat occupancy associated with at least one seat in said vehicle.

15. The method or system of claim 13, wherein said display is on said user's personal processing device; and wherein
wherein said display is on said user's personal processing device and, wherein content can be delivered on a plurality of displays; wherein said displays can display the same or varied content.
